# EUROPEAN PATENT SPECIFICATION

(11) **EP 1 065 445 B1**
(45) Date of publication and mention of the grant of the patent: **03.08.2005**
(21) Application number: 99121152.5
(22) Date of filing: 22.10.1999
(51) Int. Cl.: F23L 13/04, F23L 5/00, F23L 3/00

(54) **Device for regulating the combustion air flow rate of a boiler**
Vorrichtung zur Regelung der Verbrennungsluftmenge eines Kessels
Dispositif pour le réglage du débit d'air de combustion d'une chaudière

(30) Priority: 30.06.1999 IT MI990430 U
(43) Date of publication of application: 03.01.2001
(73) Proprietor: Baxi S.p.a., 36061 Bassano del Grappa (Vicenza) (IT)
(72) Inventor: Del Grosso, Lamberto, 36061 Bassano del Grappa (Vicenza) (IT); Baggio, Livio, 31011 Casella D'Asolo (Treviso) (IT)
(74) Representative: Ripamonti, Enrico, Dr. Ing.

(56) References cited:
- DE-U- 8 808 296
- GB-A- 165 502
- GB-A- 2 315 323
- US-A- 4 524 679
- US-A- 4 803 931
- US-A- 5 878 676

## Description

This invention relates to a device for regulating the combustion air flow rate in a wall-mounted boiler with a sealed chamber in accordance with the introduction to the main claim.

As is well known, a boiler of the stated type comprises a sealed chamber containing a burner to which at least two ducts are connected, namely one for combustion air feed and the other for flue gas or combustion product discharge. These ducts can be coaxial (with the discharge duct within the air feed duct) or be separate depending on the duct lengths.

With particular but non-limiting reference to a boiler with said separate ducts, it is known to provide a baffle inside the feed duct to enable the combustion air flow rate to be varied and hence regulate the ratio of combustion air quantity to the gas quantity present in the burner, to limit the presence of CO₂, NOₓ and CO in the flue gas leaving the boiler. By way of example, about 10³ of air to one m³ of natural gas represents an optimal air/gas ratio.

Said ratio can be regulated by means of these baffles. This however involves the following operations: measuring the flue gas "composition" (ie the content of CO, NOₓ and CO₂); removing the air duct; modifying the position of the baffle or baffles within the duct; fixing the duct to the sealed chamber; again measuring the flue gas composition and if necessary repeating the duct removal, baffle adjustment and duct fixing operations. All this evidently involves considerable time and difficulty in regulating the air flow rate through the duct, with resultant high cost.

GB-A-2315323 and GB 165502 describe a device according to the preamble of the attached claim.

US 4524679 relates to a valve for directing and controlling the flow of pressurized gas comprising a socket and a spheroidal hollow shell mounted in said socket for swivel motion. The shell interiorly forms a spheroidal socket which receives an axially rotatable valve body. The shell and the valve body respectively have an alignable aperture and gas inlet. The body and shell are rotatable between a closed position and an open position wherein the aperture aligns with the inlet.

A solution alternative to baffles for modifying the air flow rate is to control the speed of the usual fan provided in the sealed chamber, this control however involving electronic devices of a certain complexity and cost.

An object of the invention is to provide an improved device for regulating the air flow rate to the sealed chamber of a boiler.

A particular object of the invention is to provide a device of the stated type which can be easily adjusted within the air feed duct without having to separate the duct from the chamber.

A further object is to provide a device of the stated type which is of simple construction and is easily mounted on a sealed chamber boiler.

These and further objects which will be apparent to an expert of the art are attained by a device in accordance with the accompanying claims.

The invention will be more apparent from the accompanying drawing, which is provided by way of non-limiting example and on which:

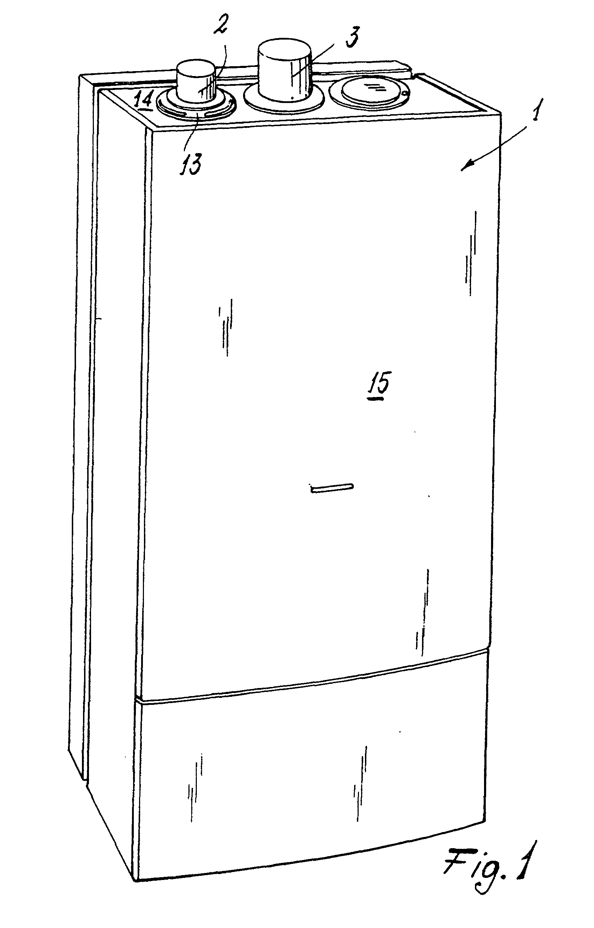

Figure 1 is a perspective view of a boiler to which the device of the invention is applied;
Figure 2 is a partially broken-away perspective view of an air feed duct of the boiler of Figure 1 provided with the device of the invention; and
Figure 3 is an exploded perspective view from below of the duct of Figure 2.

With reference to said figures, a boiler 1 comprises internally a usual sealed chamber containing a gas burner (not shown). Two separate ducts 2 and 3 are connected to this chamber, the first duct 2 being the combustion air feed duct and the other 3 being the flue gas or combustion product discharge duct.

The feed duct 2 comprises an end portion 5 directly inserted into the sealed chamber and presenting an end aperture 6 partly closed by a part 7 shaped substantially as a section of a hollow spherical cap. In this manner the aperture 6 of the portion 5 of the duct 2 lies substantially in a plane which is not perpendicular to the longitudinal axis K of the duct but lies on one side of this latter. On the end portion 5 there is mounted a member 10 having a shape such as to mate with said portion 5 preferably as a form fit. Consequently this member is also preferably shaped as a section of a spherical cap and also comprises a surface aperture 11 of dimensions preferably equal to the aperture 6 of the duct 2. This member comprises an end flange 13 which, when the member 10 has been fitted onto the duct 2, is rested on an upper part 14 of the housing 15 of the boiler 1 and is fixed to said part 14 after being suitably positioned relative to the aperture 6 of the duct 2.

By virtue of the particular shape of the member 10, the aperture 6 of the duct 2 can be varied at will depending on requirements. In this manner the correct (quantitative) combustion air feed can be chosen on the basis of the composition measurement of the flue gas leaving the boiler.

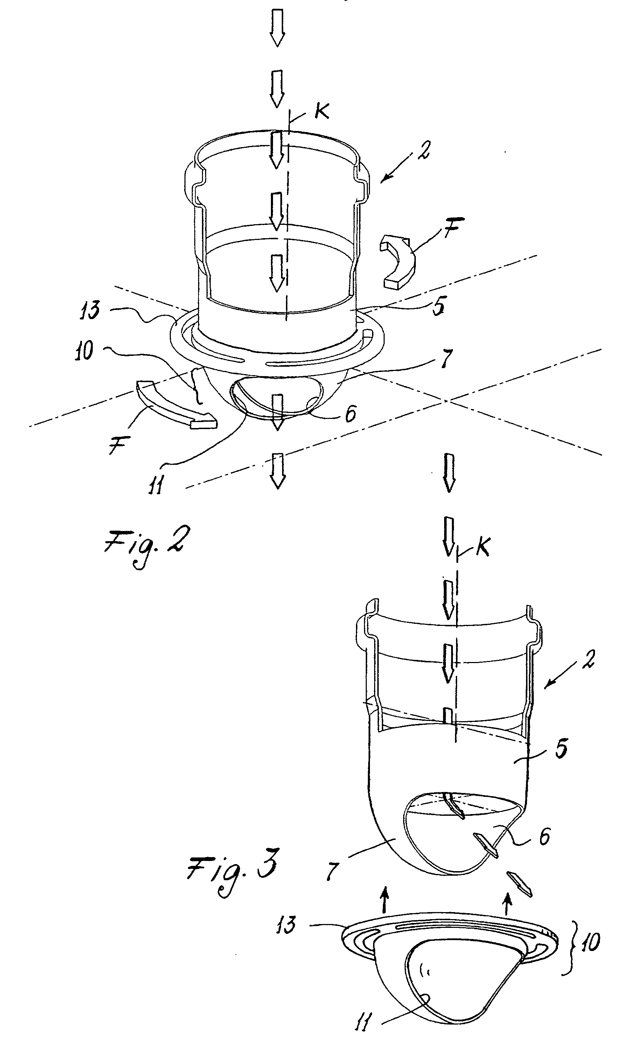

The invention is used in the following manner: with the boiler mounted and operating, an operator using known equipment measures in known manner the composition of the flue gas leaving the sealed chamber through the duct 3. If this flue gas contains a high percentage of CO₂ (and CO) the operator adjusts the flange 13 by rotating it in the direction of the arrows F of Figure 2. This movement also causes the member 10 to rotate about the duct 2 in order to change the position of the aperture 6 of this duct relative to the aperture 11 of the member 10. In the illustrated example the purpose of this change is to lessen the degree throttling of the aperture 6 by said member 10 in such a manner as to increase the useful cross-section for inflow of combustion air into the sealed chamber and hence increase the air flow rate within the burner. As a result of this there is a decrease of CO₂ within the flue gas.

Having defined the optimum position of the member 10 relative to the portion 5 of the duct 2, this member is fixed in position by usual screws (not shown) cooperating with the flange 13 and the part 14 of the housing 15 of the boiler 6.

By virtue of the invention the air flow rate to the burner can be easily regulated by means of a solution which is conceptually and constructionally simple. This regulation is achieved without removing the duct 2 from the boiler, and by acting from the outside of this duct.

A preferred embodiment of the invention has been described in which the device of the invention comprises not only the member 10 but also a particular shape for the end portion 5 of the air feed duct. The particular shape both of this duct and of the member 10 enables the air to be suitably directed into the sealed chamber.

Finally, a solution has been described applied to a combustion air feed duct separate from the flue gas discharge duct. The invention can also be applied to the case in which these ducts are coaxial and the air flow cross-section is a ring surrounding the flue gas duct.

## Claims

1. A device for regulating the combustion air flow rate in a wall-mounted boiler (1) with a sealed chamber in which a usual burner is present, this air reaching said chamber through a corresponding duct (2) opening (at 6) into it, to this chamber there also being connected a flue gas discharge duct (3), said ducts (2, 3) being separate or coaxial, said device comprising at least one element for throttling the air passage cross-section (6) of said feed duct (2) to enable the air flow rate to the sealed chamber to be varied, said throttling element being a movable member (10) operable from the outside of the duct (2), and being lockable in the position in which it throttles the passage cross-section (6) of this latter by again operating from the outside of said duct (2), said member (10) being positioned in correspondence with that end (5) of said duct which is connected to the sealed chamber of the boiler (1), **characterised in that** the throttling element is a member (10) shaped substantially as at least a portion of a spherical cap and open in its surface (at 11), said member being positioned movable on the end (5) of the air feed duct (2), which end is also shaped as at least a portion of a spherical cap and is provided with a surface aperture (6) positioned substantially in a plane inclined to the longitudinal axis (K) of the duct, and **in that** the body (10) of the throttling element is provided with a grip (13) projecting perpendicularly to the duct (2) and enabling the member (10) to be rotated relative to said duct, said rotation being lockable by fixing means.

## Patentansprüche

1. Vorrichtung zur Regelung der Verbrennungsluftmenge eines an einer Wand montierten Kessels (1), mit einer geschlossenen Kammer, in der ein üblicher Brenner angeordnet ist, die Luft gelangt zur Kammer durch ein Rohr (2), das gegenüber der Kammer offen ist (bei 6), die Kammer ist ferner mit einem Abzugsrohr (3) verbunden, wobei beide Rohre (2, 3) getrennt oder koaxial angeordnet sind, weiters ist mindestens ein Element zur Drosselung des Querschnittes (6) für den Luftdurchtritt am Zuführrohr (2) vorgesehen, um die Luftmenge zur geschlossenen Kammer zu verändern, dieses Drosselelement ist ein bewegliches Glied (10) das von der Außenseite des Rohres (2) betätigbar und in einer Stellung feststellbar ist, in der es den Durchtritt durch den Querschnitt (6) des Zuführrohres (2) drosselt, das Glied (10) ist in Übereinstimmung mit dem Ende (5) des an die geschlossene Kammer des Kessels (1) angeschlossenen Rohres angeordnet, **dadurch gekennzeichnet, daß** das Drosselelement ein Glied ist, das im wesentlichen mindestens teilweise kugelartig ausgebildet ist und an seiner Oberfläche (bei 11) offen ist, wobei dieses Glied bewegbar am Ende (5) des Luftzuführrohres (2) angeordnet ist, welches Ende ebenfalls mindestens teilweise kugelartig ausgebildet ist und eine Öffnung (6) aufweist, die im wesentlichen in einer zur Längsachse (K) des Rohres geneigten Ebene angeordnet ist, wobei der Körper (10) des Drosselelementes mit einem Griffstück (13) versehen ist, das sich quer zum Rohr (2) erstreckt und es ermöglicht, daß das Glied (10) relativ zum Rohr beweglich ist, wobei diese Drehung durch Fixietmittel feststellbar ist.

## Revendications

1. Dispositif pour le réglage du débit d'air de combustion dans une chaudière montée sur une paroi (1) avec une chambre hermétique dans laquelle un brûleur ordinaire est présent, cet air atteignant ladite chambre en passant à travers une conduite correspondante (2) qui débouche (en 6) dans celle-ci ; à cette chambre étant également raccordée une conduite d'évacuation des gaz de combustion (3), lesdites conduites (2, 3) étant séparées ou coaxiales, ledit dispositif comprenant au moins un organe d'étranglement de la section transversale du passage d'air (6) de ladite conduite d'alimentation en air (2) afin de permettre un réglage du débit d'air vers la chambre hermétique ; ledit organe d'étranglement étant un organe mobile (10) actionnable depuis l'extérieur de la conduite (2), et étant verrouillable dans la position dans laquelle il étrangle la section transversale du passage d'air (6) de cette dernière en l'actionnant à nouveau depuis l'extérieur de ladite conduite (2) ; ledit organe (10) étant disposé de façon à correspondre avec cette extrémité (5) de ladite conduite qui est raccordée à la chambre hermétique de la chaudière (1) ; **caractérisé en ce que** l'organe d'étranglement est un organe (10) formé sensiblement comme au moins une partie d'un capuchon sphérique et ouvert sur sa surface (en 11), ledit organe étant disposé de façon à être mobile sur l'extrémité (5) de la conduite d'alimentation en air (2), cette extrémité étant elle aussi formée comme au moins une partie d'un capuchon sphérique et munie d'une ouverture en surface (6) disposée sensiblement sur un plan incliné par rapport à l'axe longitudinal (K) de la conduite ; et **en ce que** le corps (10) de l'organe d'étranglement est pourvu d'une partie de préhension (13) qui se projette en saillie perpendiculairement à la conduite (2) et qui permet à l'organe (10) d'être tourné relativement à ladite conduite, ladite rotation étant verrouillable par des moyens de fixation.
